# EUROPEAN PATENT SPECIFICATION

(11) **EP 2 555 358 B1**
(45) Date of publication and mention of the grant of the patent: **26.03.2014**
(21) Application number: 11290364.6
(22) Date of filing: 05.08.2011
(51) Int. Cl.: H02B 1/54, H02B 5/00, H02G 5/02

(54) **Telescopic busbar systems**
Teleskopisches Stromschienensystem
Systèmes de barres de bus téléscopiques

(43) Date of publication of application: 06.02.2013
(73) Proprietor: Tyco Electronics Simel S.A.S., 21220 Gevrey-Chambertin (FR)
(72) Inventor: Royer Laurent, 21580 Courlon (FR)
(74) Representative: Grünecker, Kinkeldey, Stockmair & Schwanhäusser

(56) References cited:
- EP-A1- 0 967 704
- DE-C- 508 682
- FR-A1- 2 448 799
- US-A- 4 277 639

## Description

### TECHNICAL FIELD OF THE INVENTION

The present invention relates to rigid busbars and expansion connectors for High voltage AC and DC applications, and more particularly, to integrated busbar systems with adjustable length and expansion function for off-shore converter and seismic converter designs.

### BACKGROUND OF THE INVENTION

High voltage switchyards from 30 kV to 1100kV and more usually employ both flexible conductors and rigid tubular busbars to interconnect equipment such as transformers, disconnectors, circuit breakers or any other electrical or power electronic devices used in AC substations and DC converters.

Rigid tubular conductors in aluminium alloy or copper provide several advantages over flexible conductors such as:
- Tubes can be designed with large size and cross section to carry high currents (i.e.: 4000 - 6000 Amps);
- Overall diameter of the tubes can be large enough to avoid Corona and Radio Interference Voltage phenomena;
- Mechanical rigidity of the tubes reduces electro-dynamic movements of the tube during short circuits in a switchyard;
- The span between mechanical support/equipment can be increased; and
- Phase to phase distances can be optimized which allows keeping control on the electromagnetic forces within the installations.

Flexible arrangements with flexible conductors are usually used to interconnect equipments over short distances at relatively low voltages (i.e.: 132 kV and below) or to connect overhead lines to the switchyard.

An advantage of flexible conductors over rigid busbars lies in their flexibility itself. The length of the flexible conductor may be selected so as to allow the interconnected equipments to move with relation to one another and to compensate changes in the distance between the device induced by external factors and/or by thermal expansion.

For instance, environmental factors such as seismic conditions at the switchyard installation site, wind and sea wave forces on off-shore switchyard platforms, may lead to the use of flexible conductors for absorbing the relative movement between interconnected equipments that is induced by these forces.

Flexible conductors also provide self-control of the thermal expansion caused by various temperatures changes in the conductors.

In contrast, rigid busbars constraint the relative movement of connected equipments and require end connector fittings of a sliding/expansion type in order to compensate for their thermal expansion.

Flexibility also eliminates most of the mechanical loads transfer from equipments to equipments which can dramatically save the costs of using high voltage insulated supports (i.e.: insulators).

The above characteristics make of flexible conductors a common choice for connecting equipment in DC converters.

German Patent DE 508 682 describes an overhead power line for high voltage to be used as a connecting line between a circuit breaker insulator and a line feeder in outdoor switchgears. As the line feeder may move with respect to the circuit breaker insulator, the overhead power line includes two tube parts articulated in a telescopic manner so that the contact points of the overhead can follow the relative movement between the circuit breaker insulator and the line feeder.

DC converter technology is used at different levels in transmission grids and at different voltages, which can be relatively low (for e.g., 35 kV) in DC off-shore platform applications such as wind farm interconnection projects and very high (for e.g., 1100 kV) in interconnection grids projects. In both cases, this technology uses power electronic devices such as Thyristor valves which are very sensitive to mechanical forces. Typically, this equipment is hung on the roof of the converter building with insulator strings for avoiding direct transfers of the mechanical load to the equipment and for allowing the equipment to move during earthquakes or the perpetual movement of off-shore platforms that is induced by winds and waves. Consequently, flexible conductors are usually preferred to realize the connections of power electronic devices to other equipment in the building, such as wall bushings, surge arresters, etc.

However, the use of flexible conductors may lead to an increase of phase to ground insulation distances due to the natural sag of the conductors. Insulator supports are then often required to support the flexible conductors at intermediate positions in order to reduce their sag and/or to provide a safe corridor with secure insulation distances for periodic inspection of the installations.

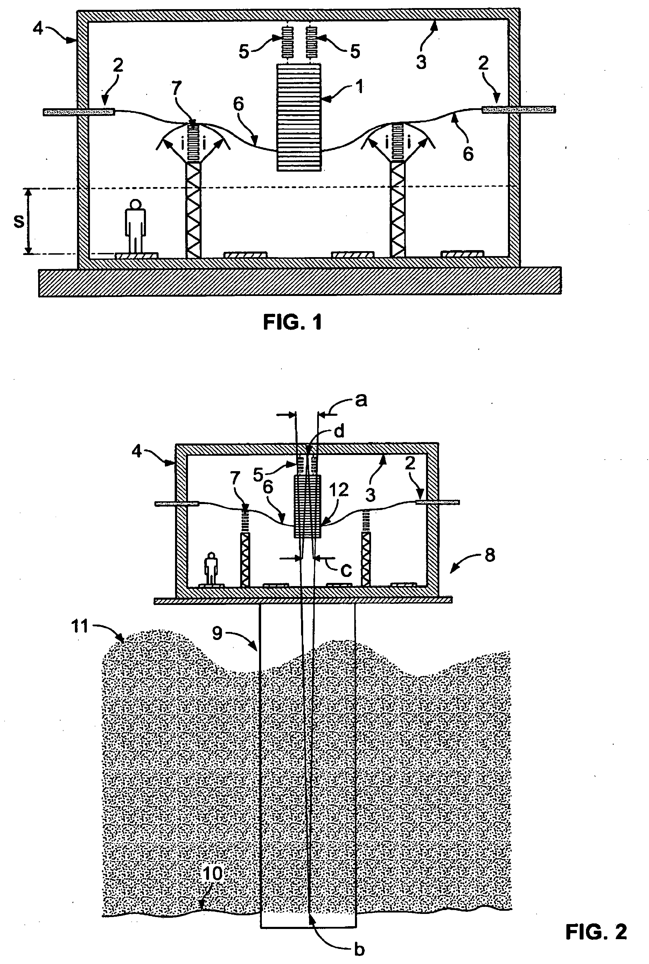

Fig. 1 schematically illustrates a conventional DC converter installation in which a power electronic device 1 is electrically connected to other equipment such as wall bushings 2. The power electronic device 1 is suspended to the roof 3 of a converter building 4 by insulating strings 5. The electrical connection between the power electronic device 1 and the wall bushing 2 is ensured by at least one flexible conductor 6. For insulation and safety reasons, the flexible conductor 6 is mechanically supported by a post insulator 7. This avoids any flashover between the flexible conductor 6 and any parts of the structures of the building 4 which are at equivalent grounding potential.

The flexible conductor 6 must be long enough to allow the power electronic device 1 to move with respect to its equilibrium, vertical position.

Movements of the power electronic device 1 may have different causes as already mentioned above. For instance, in High Voltage Direct Current (HVDC) off-shore applications, the converter building 4 is commonly installed in a steel and concrete platform structure, itself supported by foundations in the seabed. The steel structure being not fully rigid, the platform is submitted to continuous movement due to wind, waves and submarine stream forces. The converter building 4 is consequently in continuous movement in the two horizontal directions and the suspended power electronic device 1 also moves in relatively smaller amplitudes.

Fig. 2 illustrates the converter station of Fig. 1 when installed in an off-shore platform.

The off-shore platform 8 has a pillar structure 9 which is anchored in the seabed 10. The pillar structure 9 is immerged into the sea 11 and supports the building 4 of the converter station. Due to waves, winds and submarine streams, the platform 8 moves with an amplitude "a" generated by the oscillation of the platform 8 around the anchorage point "b". Consequently, the suspended power electronic device 1 may move with some other amplitude "c" generated by the oscillations of the unit 1 from its suspension point "d" which corresponds to the mechanical attachment of the strings 5 to the roof 3 of the building 4. The flexible conductor 6, which is electrically and mechanically connected to a terminal connection 12 of the power electronic device 1, will then be successively bent and extended by the movements of the power electric device 1. The amplitude "c" of the movements of the power electronic device 1 depends on the weight of the power electronic equipment 1 itself, the amplitude "a" as well as the acceleration of the platform movements.

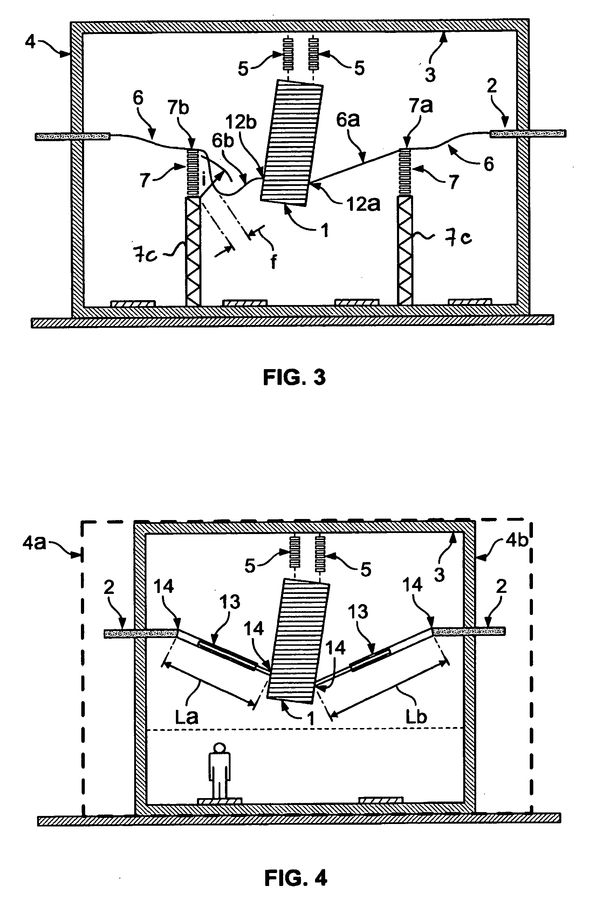

Fig. 3 illustrates the power electronic device 1 in an extreme position achieved during an oscillation movement to the left with respect to its equilibrium, vertical position. In the extreme position, if the conductor 6 at the side opposed to the oscillation direction is too short, a portion 6a of the conductor 6 between a terminal connection 12a of the power electronic device 1 and a mechanical support 7a of the post insulator 7 is in mechanical tension and, therefore, applies extended tensile forces to the terminal connection 12a and to the mechanical support 7a with the risk of damaging and/or loosing the electrical connection.

At the same time, at the opposite side of the power electronic device 1, a portion 6b of the conductor 6, which is between a terminal connection 12b of the power electronic device 1 and a mechanical support 7b, is bent, thereby absorbing the displacement of the power electronic device 1 in this direction.

In this case, if the left-hand side conductor 6 is too long or the amplitude of the displacement of the power electronic device 1 is too large, the sag of the portion 6b will be large enough to get a distance "f' between the portion 6b and the supporting post 7c that is inferior to a minimum insulation distance "i", which is required for avoiding flashovers between the portion 6b of the bent conductor 6 and the support 7c of the post insulator 7.

Thus, the length of the flexible conductors 6 must be adjusted so as to be long enough to allow the power electronic device 1 to move without any risk of pulling the terminal connections 12, the insulator 7 or the wall bushing 2 at one side of the power electronic device 1, while avoiding the occurrence of flashover with grounding structures located at the opposite side.

However, since the amplitude of the oscillations depends on several parameters, such as the weight and acceleration of the power electronic device 1, and the unpredictable magnitude of natural forces, it is difficult to provide an optimal length that avoids the problems discussed above under all circumstances.

Thus, there is a need for a connection system for HV-DC applications, namely, for off-shore converter and seismic converter designs, that can be conveniently adapted to a wide variation of relative distances and relative movements between interconnected equipments and which can be expanded over long distances, while avoiding the disadvantages of the conventional systems discussed above.

Further, since the power electronic device is not damped during oscillations by the flexible conductors, it must tolerate repeated accelerations. These are detrimental to the life time of the whole power electronic equipment which is the "heart" and the expensive part of the converter system.

The movements of the power electronic equipment and respective connection system may also render the whole system vulnerable to surge events, namely, in the case of outdoor installations, which may also damage the power electronic device.

Thus, it is also desirable to provide a connection system having integrated functions for providing mechanical and/or electrical protection of sensitive connected equipments, such as power electronic valves.

### SUMMARY OF THE INVENTION

The present invention aims at overcoming the disadvantages and shortcomings of the prior art techniques and an object thereof is to provide a rigid conductor device with an integrated expansion movement system, and an integrated damping system according to claim 1.

A further object is to provide a rigid conductor device with at least one of a surge protection system and an expansion system for taking into account thermal expansion effects.

According to an embodiment it is provided a rigid conductor device having an adjustable length, the rigid conductor device comprising a first conducting member and a second conducting member; wherein the first and the second conducting members are adapted to be assembled so that the second conducting member can reversibly extend and retract from an end part of the first conducting member along an axial direction, wherein the rigid conductor device further comprises damping means adapted to damp a movement of the second conducting member with respect to the first conducting member; wherein said damping means comprise a sealed chamber adapted to pass a portion of the second conducting member within, the sealed chamber being filled with a fluid so that the movement of the second conducting member produces a compression force or a depression force opposed to the movement.

According to a further development, the first conducting member has a through hole adapted to pass the second conducting member to and from said end part of the first conducting member.

According to a further development, the first and second conducting members each comprise a body made of a rigid and tubular electrical conductor.

According to a further development, the second conducting member comprises conductive coupling means adapted to provide an electrical coupling between the first and second conducting members that is substantially constant irrespective from the adjustable length.

According to a further development, the conductive coupling means are adapted to be accommodated within the first conducting member.

According to a further development, the conductive coupling means are adapted to connect to a fixed terminal connection of the first conducting member and are substantially flexible so as to adapt to the adjustable length.

According to a further development, the conductive coupling means comprise a conducting blade or a plurality of conducting blades that are mechanically and electrically assembled at terminal ends; wherein each conducting blade can be bended, and each of said assembled blades has a pre-determined length adapted to provide a functional gap between blades at a bended portion.

According to a further development, the chamber is provided within the first conducting member, the chamber being sealed at one end by a sealing cap and at the other end by a sealing joint adapted to adjust to a cross section of the second conducting member.

According to a further development, the rigid conductor device further comprises a control valve for controlling the pressure of the fluid in the chamber.

According to a further development, the rigid conductor device, further comprises a sensor device adapted to measure a quantity of movement of the second conducting member and to output a signal indicative of the measured quantity.

According to a further development, the rigid conductor device further comprises a surge arrester device adapted to be integrated in the first and/or second conducting member and surge monitoring means adapted to monitor the surge arrester device and to transmit monitored surge information to a remote terminal.

According to a further development, the surge arrester device comprises a metallic part having a body adapted to be enclosed in the tubular conductor and a protrusion adapted to emerge through an opening of the tubular conductor for allowing a surge current to flow to the ground, and an insulating housing adapted to insulate the metallic part and to emerge around said protrusion to electrically isolate said surge current from the tubular conductor. According to a further development, the rigid conductor device further comprises an expansion conducting member adapted to be telescopically assembled to an end part of the first conducting member opposed to the second conducting member, and to extend and retract from the respective end part of the first conducting member for adjusting an initial length in said axial direction.

A further object is to provide a double telescopic busbar device, comprising a first rigid conductor device and a second rigid conductor device according to the invention wherein the first and second rigid conductor devices are rigidly coupled to each other and symmetrically disposed along the axial direction so that the movable conducting member of the first rigid conductor device and the movable conducting member of the second rigid conductor device are adapted to extract and retract from opposing ends of the double telescopic device.

These objects are solved by the subject matter of the independent claim. Advantageous embodiments of the present invention are defined by the dependent claims.

The accompanying drawings are incorporated into and form a part of the specification for the purpose of explaining the principles of the invention. The drawings are not to be construed as limiting the invention to only the illustrated and described examples of how the invention can be made and used.

### BRIEF DESCRIPTION OF THE FIGURES

Further features and advantages will become apparent from the following and more detailed description of the invention as illustrated in the accompanying drawings, in which:
**Fig. 1** illustrates a converter station having a power electronic device installed in a conventional manner;
**Fig. 2** illustrates an off-shore platform with a converter station as shown in Fig. 1;
**Fig. 3** illustrates the power electronic device of Fig. 1 in an extreme position achieved during oscillation movements;
**Fig. 4** schematically illustrates a power electronic device connected with telescopic busbars according to an embodiment of the present invention;
**Fig. 5** is a view in longitudinal section of an embodiment of the telescopic busbar according to the present invention;
**Fig. 6** is a longitudinal view of a flexible conductive element used in the telescopic busbar according to an embodiment of the present invention;
**Fig. 7** is a view in longitudinal section of a double telescopic busbar according to an embodiment of the present invention;
**Fig. 8A** schematically illustrates a telescopic busbar connected by two flexible connectors;
**Fig. 8B** shows a detailed view of the flexible connector coupled to an end of the telescopic busbar shown in Fig. 8A,
**Fig. 9** is a 3D exploded view of the flexible connector;
**Fig. 10** schematically illustrates a telescopic busbar with integrated surge protection system, damping control mechanism and a remote control system according to an embodiment of the present invention;
**Fig. 11** is a view in longitudinal section of a telescopic busbar with an integrated expanding system according to an embodiment of the present invention;
**Fig. 12** is a perspective view of the integrated expanding system shown in Fig. 11;
**Fig. 13** is a schematic representation of a conventional busbar system made of one single tube and without external forces applied to it;
**Fig. 14** is a schematic representation of the conventional busbar system shown in Fig. 13 when submitted to external forces;
**Fig. 15** is a schematic representation of the adjustable telescopic busbar according to the present invention and in the absence of external forces applied to the telescopic busbar; and
**Fig. 16** is a schematic representation of the adjustable telescopic busbar shown in Fig. 15 when submitted to a combination of external forces.

### DETAILED DESCRIPTION OF THE INVENTION

Advantageous embodiments of a telescopic busbar constituted according to the present invention will now be described in further detail with reference to the accompanying drawings.

Fig. 4 illustrates a power electronic device 1 in which two telescopic busbars 13 according to an embodiment of the present invention replace the conventional flexible conductors 6 shown in Fig. 1.

Each telescopic busbar 13 may be connected to the wall bushing 2 and to the power electronic device 1 with articulated connectors 14 (not shown) for allowing some rotational mobility of the longitudinal axis of the telescopic busbar around the connection points with the power electronic device 1 and the wall bushing 2. Articulated connectors are known in the art and, therefore, shall not be described here.

The telescopic busbar 13 is designed so as to provide the mechanical and electrical properties of a rigid and tubular conductor and to be able to expand or retract along its longitudinal axis for providing a variable length without loosing its conductive performances at high current and high voltage applications.

As exemplified in Fig. 4, the longitudinal length of the telescopic busbar 13 may vary during movements of the power electronic device 1 and to retract down to a minimum length La and expand up to a maximum length Lb. The parameters La and Lb can then be selected so that the maximum variation of the busbar longitudinal length, Lb - La, is sufficient for absorbing the full amplitude of the oscillations of the power electronic device 1 during the movements of the converter building 4. The parameter Lb - La may also include a safety margin.

The rigidity of the telescopic busbar 13 along its cross section eliminates the negative effects of the sag formed with flexible conductors and advantageously allows removing the post insulators 7 from the building which represents a significant economy in building costs. The distances between wall bushings and the power electronic device can then be significantly reduced since only a safety distance "s" and space for the maintenance corridor must be considered. Consequently, the initial volume of a converter building 4a when using flexible conductors can be advantageously reduced to a converter building 4b of smaller volume when using the telescopic busbars 13. This allows to save overall costs associated with the building and supporting pillar structure as well as to reduce working hours for building maintenance.

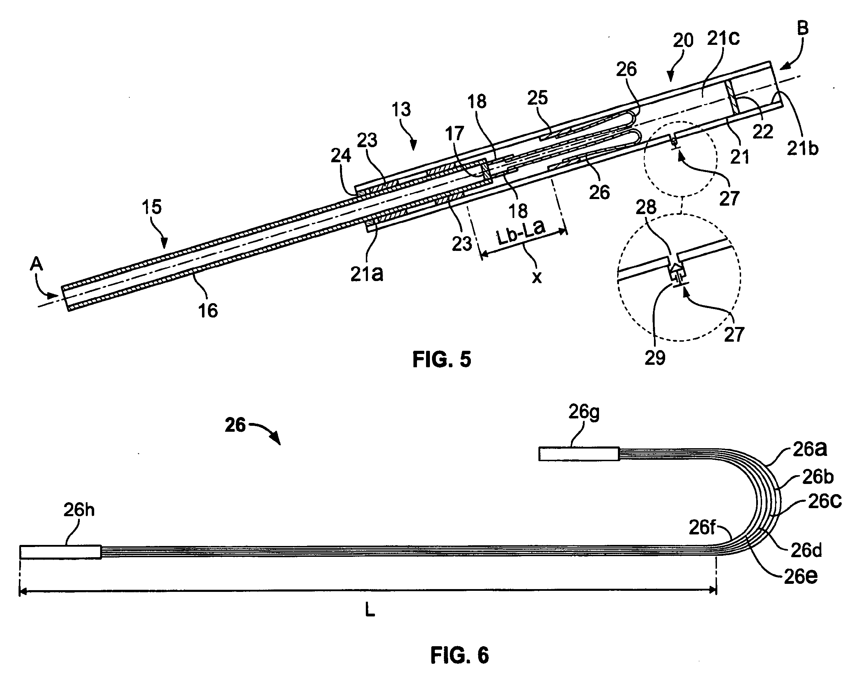

An embodiment of the telescopic busbar 13 will now be described with reference to Fig. 5, which shows a view in longitudinal section of the telescopic busbar 13.

The telescopic busbar 13 according to this embodiment is particularly suitable for power electrical connections at high voltage and/or off-shore switchyards and converter buildings.

As shown in Fig. 5, the telescopic busbar 13 comprises two conducting members, an outer conducting member 20 an inner conducting member 15.

The inner and outer conducting members 15 and 20 are telescopically assembled along an axial direction so that a portion of the inner conducting member 15 can move within the outer conducting member 20 in reversed directions. Further, the inner member 15 can freely move within the outer member 20 so as to reversibly extract and retract from an end part 21 a of the outer member 20 in the axial direction, preferably in a smoothed manner.

When the free end 21 b of the outer member 20 is fixed to a connection point, the longitudinal length of the telescopic busbar 13 can be dynamically adjusted to the movements of the power electronic device 1 by the movable inner conducting member 15.

Preferably, the main body of the inner and outer conducting members 15 and 20 have a fixed length and is formed by rigid, tubular conductors or tubes 16 and 21 of a suitable conductive material such as aluminium alloy produced by hot extrusion processes. This material associates low weight, high strengths and high conductivity performances at a reasonable cost.

Guiding means may be provided, preferably inside the conducting member 20, in order to align and facilitate the longitudinal movement of the inner conducting member 15 in relation to the outer conducting member 20. Preferably, the tube 16 is guided inside the tube 21 by at least one bearing 23. The bearings 23 ensure a perfect alignment of the tubes 16 and 21 but also provide a rolling effect of the conductors 15 and 20 during sliding movements of the telescopic busbar 13. Mechanical and friction contact between tubes 16 and 21 is then avoided. However, guiding means other than bearings and well known in the art may be used instead for achieving the same purpose.

The present invention also foresees integrating a damping system in the telescopic busbar 13 for damping undesirable oscillations of the power electronic device 1.

The damping system may be implemented by any mechanism capable of creating a resistance against the axial movements of the inner conducting member 15 with respect to the outer conducting member 20 under operating conditions of the telescopic busbar 13, thereby gradually reducing oscillations of the telescopic busbar length. This damping effect is then mechanically transferred to the power electronic device 1 via the terminal connections 12.

The damping function is conveniently implemented by a sealed chamber filled with a fluid, such as a gas or a liquid, and within which an end portion of the inner conducting member 15 is passed during its longitudinal movements. The fluid is at a given pressure so as to exert a resistant force opposed to the movement of the inner conducting member 15 and of sufficient intensity for providing a desired level of damping when the telescopic busbar 13 expands or retracts under the oscillations of the power electronic device 1.

In Fig. 5, the damping chamber is a sealed chamber 21 c provided inside the outer conductor 20, and which is formed by sealing two opposed ends of an inner volume of the tube 21 within which the inner member 15 moves when the busbar 13 expands or retracts.

The sealed chamber 21c may be formed by closing the tube 21 within a distance from the free end 21 b with a sealing cap 22, which may be welded to the tube 21.

The opposed end 21 a of the tube 21 through which the inner conductor 15 is passed may be sealed by a sealing joint 24 that is adjusted between the tubes 16 and 21. The sealing joint 24 can be a rubber seal leap type and is able to fulfil its sealing function in dynamic modes. The joint 24 ensures the sealing of the chamber 21c during movements of the inner conductor 15 in such a manner that the chamber 21 c is in compression when the busbar 13 retracts and in depression when the busbar 13 expands, with respect to equilibrium, initial length.

The fluid filing the sealed chamber 21 c is preferably air or any appropriate gas which can be used to operate the busbar system under high voltage conditions with the lightest possible weight.

The inner conducting member 15 is closed at the end of the tube 16 that moves within the sealed chamber 21 c by a sealing and conductive end cap 17. This prevents the fluid of the sealed chamber 21c from entering the tube 16. The sealing cap 17 is preferably welded to the tube 16.

The strength of the damping effect may be adjusted by controlling the fluid pressure and/or the fluid quantity inside the chamber 21c, for instance using a control valve, which is installed on the tube 21 within the length of the chamber 21c in order to control the fluid flow into/out from the chamber 21 c.

In Fig. 5, the control valve is an adjustable air valve 27 that is implemented in the telescopic busbar 13 by providing a hole 28 drilled in the tube 21, through which the air can enter or exhaust from the chamber 21c, and a valve 29 adapted to the hole 28 that is installed on the tube 21. The valve 29 is adjustable such that the air flow is controlled by closing or opening the valve. The valve 29 may be closed and opened manually and/or automatically in response to a control signal sent from an operator or from a sensor unit as will be described later.

The busbar 13 works mechanically like a jack which provides a damping additional function to it. It is critical to the power electronic devices to be damped as smoothly as possible during their movements in order to reduce the amplitudes and acceleration of the movements. This avoids premature failure of internal connections or critical components of the power electronic device.

The electrical coupling between the inner and outer conducting members 15 and 20 may be established by providing electrical coupling means in the inner conducting member 15 that are capable of maintaining the electrical coupling between the two conducting members 15 and 20 at all times and without limiting the longitudinal movement of the inner conducting member 15. The electrical coupling means may be conveniently implemented by a flexible conductor 26 that can be electrically connected to terminal connections that are respectively fixed in the inner and outer members 15 and 20, and which is capable of flexibly adjusting to a variation of the distance between these fixed terminal connections when the telescopic busbar 13 expands or retracts.

Referring to Fig. 5, the inner conductor 15 is equipped with two electrical terminal connections 18 (or at least one) welded to the conductor tube 16 or to part of the sealing cap 17 such as to electrically connect the conductor tube 16 to two flexible conductors 26 (or at least one). Each flexible conductor 26 is connected to a fixed terminal electrical connection 25 provided within a certain distance on the inner side of the tube 21.

The flexible conductors 26 are preferably made of a highly conductive material like copper in order to carry equivalent current capacity as the inner conductor 15.

The flexible conductor 26 should be flexible enough and have a suitable length for being accommodated inside the chamber 21 c without blocking the displacements of the inner conductor 15.

According to an advantageous embodiment, the flexible conductor 26 is made of at least one blade of an electrically conductive material such as copper. Preferably, the flexible conductor 26 may be made of an assembly of copper blades that ensure electrical continuity of the busbar 13 during sliding movement of the inner conducting member 15.

In the embodiment illustrated in Fig. 6, the flexible conductor 26 comprises six copper blades 26a, 26b, 26c, 26d, 26e and 26f which have an individually adapted length to provide a functional gap between them in their curved portion when the flexible conductor 26 is bent. The blades are mechanically and electrically assembled at each end by terminal end fittings 26g and 26h, preferably by welding. The terminal end fittings 26g and 26h are respectively adapted to be connected to the terminals 18 and 25 of the conducting members 15 and 20.

The connection of the flexible conductor 26 to the terminals 18 and 25 may be made by bolts, which are a common and cheap method in the art, or by any suitable attaching method. The number and type of bolts for making these and other connections described herein, can be adapted by those skilled in the art to the particular size and design of the parts to be connected and, therefore, shall not described here.

The terminal end fitting 26h is fixed to the terminal connection 18 so that the copper blades 26a-26f extend longitudinally away from the inner conductor 15 over a length L, followed by a curved or bended region where the blades are bended over themselves by a U-turn for connecting the other terminal end fitting 26g to the terminal 25 fixed in the inner side of the tube 21.

The total length of the flexible conductor 26 (when not bended) is preferably at least twice the length Lb - La for allowing a full extension/retraction of the busbar 13 without damaging the electrical coupling. The terminal connection 25 should then be provided at a distance from the end of the guiding means 23 that is substantially equal to Lb - La.

This design allows the variation of distance between the terminal connections 18 and 25 caused by the expansion or retraction of the busbar 13 to be absorbed by a displacement of the bended region with respect to the movable, inner conductor 18.

When the busbar 13 retracts, the distance between the terminal connections 18 and 25 decreases, causing the terminal end fittings 26h and 26g to approach each other. The bended region is displaced within the chamber 21 c in the direction of movement of the inner conductor 15 while the length L decreases. When the busbar 13 expands, the distance between terminal connections 18 and 25 and consequently, the terminal end fittings 26h-26g increases, causing the bended region to move in the reverse direction and thereby, increasing the length L.

Thus, the flexible conductor 26 allows the inner and outer conducting members 15 and 20 to move freely, at least within the range allowed by the full length of the blades, while maintaining the electrical conductivity between the two conducting members 15 and 20 substantially constant irrespectively from the state of extension of the telescopic busbar 13.

As would be realized by those skilled in the art, the number of flexible conductors 26 is not limited to two. Configurations using one or more than two flexible conductors 26 are also envisaged.

In order to ensure that the electrically coupling between the two conductors is exclusively made via the flexible conductor 26, and the terminal connections 18 and 25, the outer surface of the inner tube 16 and/or the inner surface of the outer tube 21 may be covered by an insulating material for avoiding electrical contact between the tubes and/or with the conducting blades of the flexible conductor 26.

In addition, the inner and/or outer conductors 15 and 20 may be implemented with means (not shown) for restricting the retraction and expansion of the busbar to the lengths La and Lb, respectively, and/or for avoiding the inner conductor 15 to be accidentally pulled out or push into the outer tube 20, thereby, damaging the electrical coupling.

Another variant of the invention is to have a telescopic busbar that can be expanded over a longer distance.

In some typical HVDC on-shore applications the converter stations are submitted to seismic condition, especially in China, Gulf region and South American countries. In that case the valves can be submitted to important movements during the earthquakes, sometimes 1 meter to 1.5 meters.

Interconnection projects where high transfer capacity is involved require much bigger power electronic valves in comparison with wind or solar farm interconnection projects. In this case, the amplitude movements of the valves induced during a seism can be important.

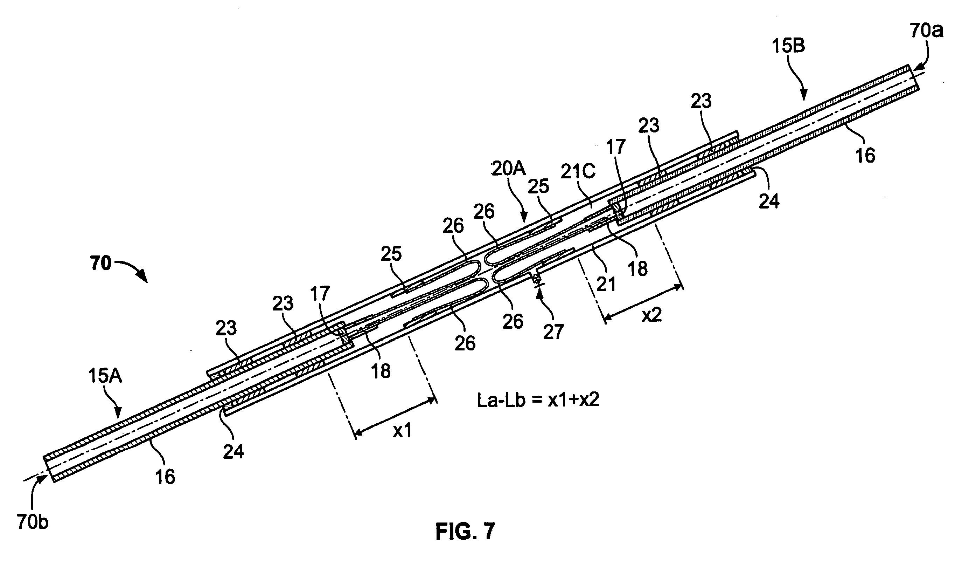

This variant of the invention, which is basically a double telescopic busbar, shall now be described with reference to Fig. 7.

In Fig. 7, the double telescopic busbar 70 is made of an assembly of one female tubular conductor 20A and two identical male tubular conductors 15A and 15B, which are similar to the inner conducting member 15 shown in Fig. 5. Each free end 70a and 70b of the busbar 70 may be connected, respectively, to the wall bushing 2 and the valve 1 with appropriate connectors (not represented here). The tubular conductors 15A and 15B are preferably made of aluminium tubes 16 which are respectively sealed by a conductive cap 17, preferably by welding.

The length of the female conductor 20A should be selected so that the telescopic movement of the male conductors 15A and 15B within the tube 21 does not overlap and interfere with each other.

The male conductors 15A and 15B are guided within the inner chamber 21 c of the female tube 20A by at least four bearings 23, two bearings provided for each male conductor, in order to ensure a free sliding of the male conductors 15A and 15B within the female conductor 20A.

Two sealing joints 24, one installed at each end of the tube 21, ensure the sealing of the sealed chamber 21c during the movements of the tubular conductors 15A and 15B. This allows implementing a damping function in the double telescopic busbar 70 such as described with reference to the telescopic busbar 13.

As previously described with reference to Fig. 6 with full details, an adjustable air valve 27 may be provided in the female conductor 20A, basically located in the middle of the tube 21, for regulating the exhaust and intake of air during the compression and extension phases of the telescopic busbar 70 in order to damp the oscillation movements of the power electronic device 1 in the hall of the converter station.

The total extension/compression distance of the double telescopic busbar 70 is provided by X₁ + X₂, wherein X₁ and X₂ are respectively the strokes provided by male conductors 15A and 15B. This configuration allows doubling the single stroke X (Lb-La) of the telescopic busbar 13 described with reference to Fig. 5 for comparable dimensions of the male conductors 15A and 15B.

The double electrical continuity between each of the male conductors 15A and 15B and the female conductor 20A, respectively, is ensured by four flexible conductors 26 or shunts (or at least one per male conductor). Each flexible conductor 26 is connected to a respective terminal 18, which is provided on the tube 16 of the male conductor 15A or 15B, and to a respective terminal 25 provided on the inner side of tube 21.

The guiding and the electrical coupling between the female conductor 20A and each individual male conductor 15A and 15B are made in a similar manner as described previously with reference to the telescopic busbar 13 and shall not be described again.

The double telescopic busbar 70 can be seen as the result of joining two telescopic busbars 13 according to the previous embodiment that are symmetrically disposed with respect to each other so as to join the free end 21 b of the outer conductor 20 of each busbar 13 along the same axial direction, while the respective inner conductor 15 of each busbar 13 is telescopically assembled so as to extended and retract from the respective end 21a in opposed directions.

As will be realized by those skilled in the art, several modifications of the double telescopic busbar 70 may be envisaged. For instance, the male conductors 15A and 15B do not have to be necessarily identical as described above and/or to be aligned exactly along the same axis. The length of the male tubes may be different for providing different strokes at each side of the double telescopic busbar. The flexible conductors 26 attached to each male conductor 15A and 15B may also be different, for instance, have different lengths, and the terminal connections 25 in the female conductor 20A be provided at different distances with respect to the free ends 70A and 70B, respectively. The female conductor may also have different cross-sections at each free end for assembling with male tubes of different cross-sections.

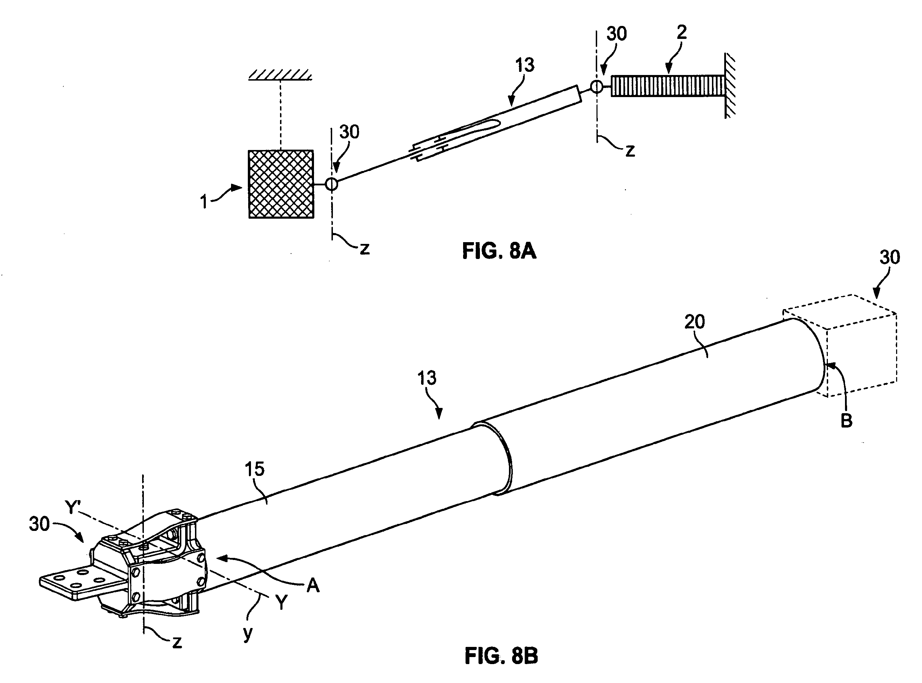

It is also envisaged associating specific connectors to attach the telescopic busbar to connection points. These specific connectors are flexible and also have some radial damping characteristics, as will be now described with reference to Figs. 8A and 8B.

Namely, a flexible connector with damping characteristics may be associated to the telescopic busbar 13 so that the connector can provide at least one additional damping performance in plans perpendicular(s) to the axial movement of the telescopic busbar 13. The radial damping function may be provided alone or in combination with the integrated axial damping system described above.

Fig. 8A schematically illustrates a telescopic busbar connected by two flexible connectors according to an embodiment of the present invention.

In Fig. 8A, each free end of the telescopic busbar 13 is coupled to the wall bushing 2 and the power electronic valve 1 by respective flexible connectors 30. Nevertheless, it may be envisaged to connect the telescopic busbar 13 with a known articulated connector at one free end and with a flexible connector 30 at the other free end in order to provide different damping and/or flexibility characteristics at each connected side of the telescopic busbar 13. For instance, the flexible connector 30 may be used only at the side connected to the movable power electronic valve 1 which is submitted to larger movement amplitudes than the opposite end coupled to the wall bushing 2.

The flexible connector 30 has some flexibility around the axes y and z which allows the power electronic valve 1 to move in any direction without any stress from the connections. At the same time, the forces applied on the wall bushing 2 will also be limited.

Fig. 8B shows in more detail the flexible connector 30 connected to the free end part A of the male conductor 15 of the telescopic busbar 13. A similar flexible connector 30 (not represented here) is connected to the opposite free end part B of the female tube 20.

The flexible connector 30 is preferably bolted or welded to the end part A of the male tube 15. However, the flexible connector 30 may be connected by any other suitable techniques known in the art. Bolting has also the advantage of fixing the flexible connector 30 to the telescopic busbar 13 in a removable manner, which permits that parts be easily assembled or disassembled at the installation site.

Considering the axial damping performance is mainly provided by the expansion of the telescopic busbar 13, the flexibility of the connector 30 around the axis y is limited to few degrees in the vertical plane. Nevertheless, as the power electronic valve 1 also has some movements in the Y-Y' direction, it may be desirable to incorporate a specific damping function around the axis z in the flexible connector 30 in order to achieve a combination of damping functions between the telescopic busbar 13 and the flexible connectors 30 in any direction.

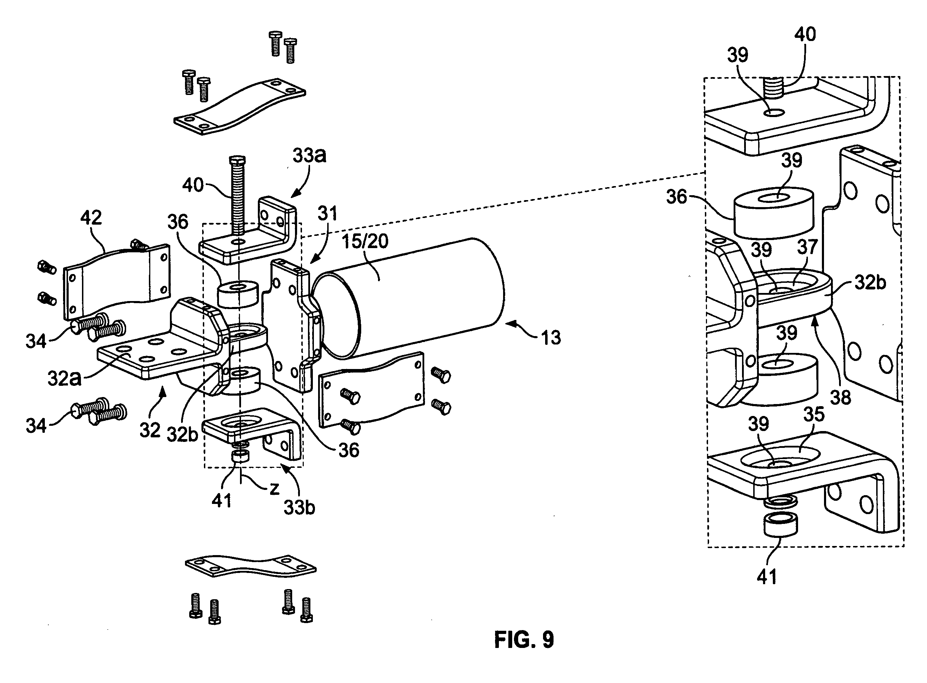

Fig. 9 is a 3D exploded view of the flexible connector 30 shown in Fig. 8B.

In reference to the Fig. 9, the flexible connector 30 has a first connection part, here represented by a terminal 32, for connecting to equipment at the installation site, and a second connection part 31 for connecting to an end part A or B of the tubes 16 or 21 of the telescopic busbar 13. The connection part 31 can be welded or bolted to the tube 16 or 21.

The terminal 32 comprises a flat palm 32a adapted to be rigidly connected to a terminal of equipment, like the power electronic valve 1 and the wall bushing 2, using techniques known in the art such as bolting. The terminal 32 is linked to the connection part 31 by a flexible assembly set around the z axis.

A flexible assembly part engages the terminal 32 and the connection part 31 so that they may perform a restricted rotation movement around the rotation axis z.

The flexible assembly part comprises two flanges (or at least one flange 33), an upper flange 33a and a lower flange 33b, which may be fixed to the connection part 31 by bolts 34, for instance four bolts. Each flange has an elliptical cavity 35 for accommodating a portion of a bush 36 having an elliptical cross-section. The elliptical form of the cavity 35 is designed so as to block a rotation of the elliptical bush 36 around the z axis when the bush 36 is assembled in the cavity 35.

The terminal 32 is extended at the opposite side of the palm 32a by a tongue 32b. The tongue 32b has two cavities 37 and 38 for accommodating the opposite part of the bush 36. The cavities are located on an upper surface and a lower surface of the tongue 32b, diametrically opposed to each other. The two cavities 37 and 38 fulfil the same function than the flange cavities 35 and consequently also block in rotation the elliptical bushes 36 around the z axis. The flanges 33a, 33b, the bushes 36 and the tongue 32b may have a through-hole 39 for concentrically mounting these elements along a mounting axis in alignment with the axis z. The mounting axis may be physically provided by a bolt 40. The bushes 36 and the tongue 32b are sandwiched between the two flanges 33, the mechanical assembly being ensured by the bolt 40 and a nut 41.

The above configuration provides good stability to the flexible connector 30. However, a simplified version of the flexible connector 30 may be envisaged in which the flexible assembly part comprises a single flange and a single bush, which are to be mounted on only one side of the terminal 32. In this case, the tongue of the terminal 32 may have only one cavity provided at the mounting side of the flexible assembly set.

The cavities 35, 37 and 38 may be provided with a non-circular shape other than elliptical and suitable for blocking the rotation of the bush 36 due to the geometrical constraints imposed by the cavities.

If the power electronic valve 1 is forced to oscillate due to external factors, movements of the valve 1 in the Y-Y' direction are transferred to the terminal 32 of the connector 30 which cause the terminal 32 to rotate around the axis z within the flexibility allowed by the bushes 36. The bushes 36 work in torsion around the axis z and ensure a damping function around the same axis z by their "spring back" effects.

The combination of the telescopic busbar 13 with the flexible connector 30 described above allows to obtain a self-damping busbar system able to damp the movements of power electronic devices or other hanging devices in any direction during the working life of a off-shore or on-shore converter station even if submitted to regular or exceptional movements from various origins like wind, waves, storms or earthquakes.

The electrical continuity between the terminal 32 and the connection part 31 is ensured by, at least one flexible conducting element 42 (shunt or braid) preferably oriented such as to offer free movement around the rotation axis z.

The flexible connectors 30 described above may also be conveniently used for connecting the double telescopic busbar 70 and/or any rigid tubular conductor to a connection point.

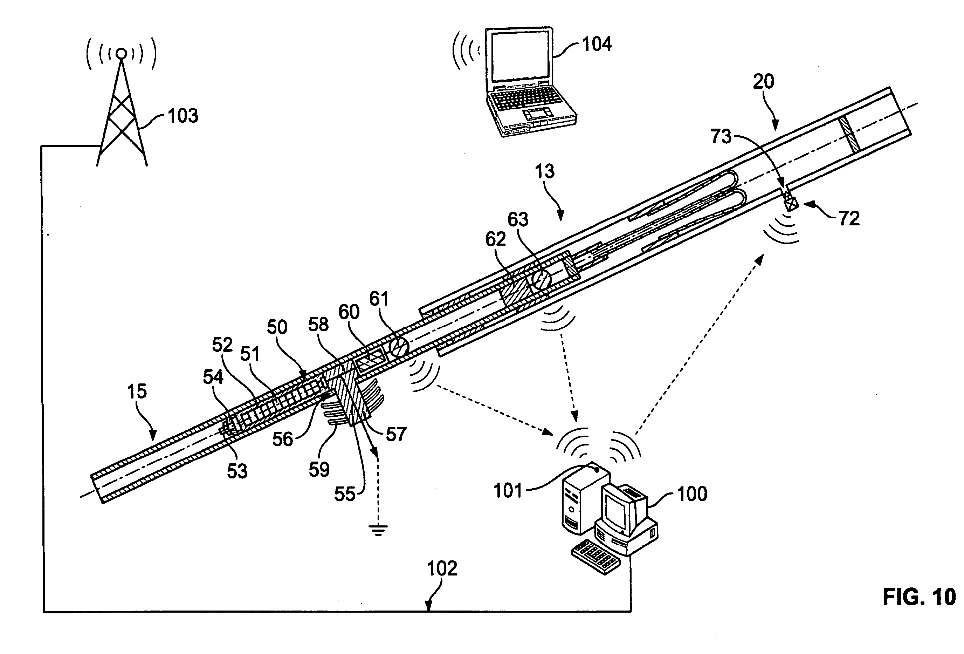

The telescopic busbar according to the embodiments described above may be conveniently associated with "smart" solutions by integrating additional functions like surge protection. Additionally or alternatively, it is also envisaged to incorporate sensors, transmitters and receivers in order to optimize and manage the performances of the integrated busbar system. These additional functions will now be described with reference to Fig. 10. According to an embodiment of the invention, surge protection means for protection of the equipment may be integrated in the telescopic busbar 13. The surge protection means may comprise a surge arrester that can be part of the rigid and /or telescopic busbar 13.

With reference to Fig. 10, the surge arrester 50 is enclosed in the male tube 15 of the telescopic busbar 13. The surge arrester 50 is conventionally made of varistors 51 (ZnO blocks) which are themselves enclosed in an insulation housing 52. The surge arrester 50 may be electrically connected to the male tube 15 of the telescopic busbar 13 by means of a bolt 53 (incoming side of surge) that is bolted to a conductive wall 54 fixed inside the tube 15 and electrically connected to it. The surge arrester 50 further comprises a metallic protrusion or rod 55 that emerges from a opening, for instance a hole 56, provided in the tube 15. The insulating housing 52 also emerges from the tube 15 through the hole 56 in order to isolate the surge current that flows through the metallic rod 55 from the surge arrester 50 to the ground. The insulation level of the emerging part of the housing 52 may be reinforced by an appropriate number of shades 59 made in polymeric material. A hydrophobic material such as a resin may be filled in an area 57 between the rod 55 and the insulating housing 52 for avoiding having air inside the insulating housing 52.

The surge protection function may also be complemented with surge monitoring means, such as a surge counter 60, for monitoring a condition of the surge arrester device 50.

The surge counter 60 may be conveniently integrated in the telescopic busbar 13 itself so as to acquire monitoring data at all times or at certain time intervals. As exemplified in Fig. 10, a secondary rod 58 that is electrically connected in parallel to the protruding rod 55 is also connected to the surge counter 60 which is preferably enclosed in the tube 15. The surge counter 60 delivers the acquired surge information to a transmitter 61, preferably, also accommodated inside the tube 15. The transmitter 61 then delivers the surge information to a remote terminal, such as a computer 100 with a receiver unit 101.

A sensor device may also be integrated in the telescopic busbar for measuring a quantity of movement of the inner conducting member 15, such as acceleration or speed. For instance, the sensor device may be an accelerometer 62 that is coupled to the movable conducting member 15 of the telescopic busbar 13. The accelerometer 62 records the acceleration and/or speed of the tube 15, permanently or at certain time intervals. This information is transmitted to the receiver 101 by a transmitter 63, which is connected to the accelerometer 62.

A data management system installed on the computer 100 analyzes the data information provided by the accelerometer 62 via the transmitter 63 and immediately sends corrective data information to a receiver 72 which enslaves the control valve provided on the outer conducting member 20, in this case a motorized air valve 73. The computer 100 may be connected via a network 102 to an antenna, such as a GSM antenna 103, which provides the possibility of monitoring events and adjusting some corrective parameters from a remote terminal, such as portable computer 104, on a remote system off-shore or on-shore.

In case the surge protection and the acceleration detecting functions are both integrated in the telescopic busbar 13, a single transmitter unit may be provided in the busbar 13 in order to collect and transmit all monitoring data acquired by the sensors integrated in the telescopic busbar, such as surge information data and the acceleration/speed data, to the receiver 101 at the remote computer 100.

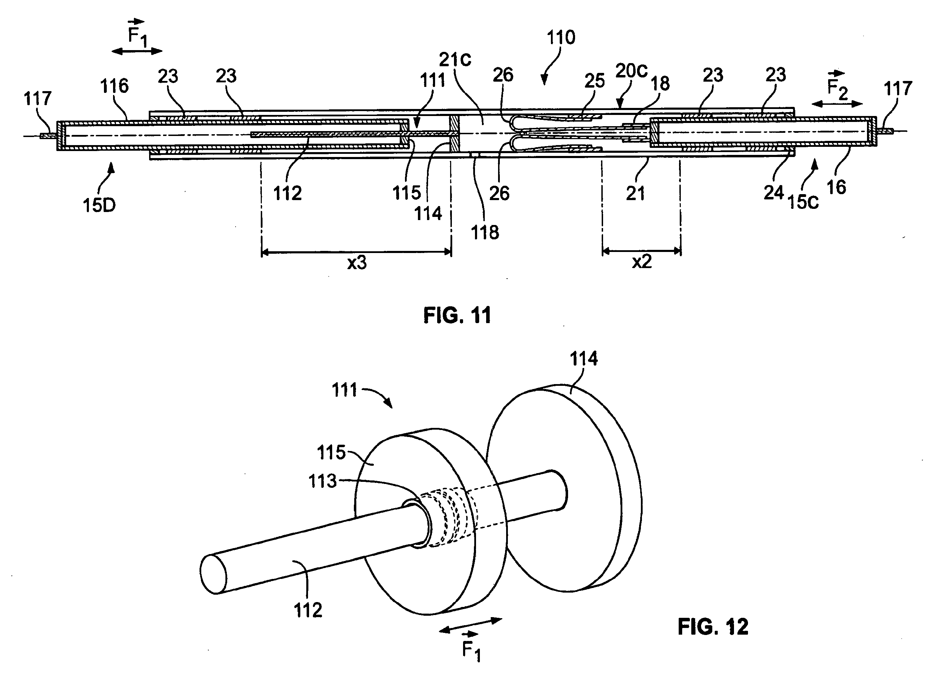

As will be realized by those skilled in the art, the surge protection function and/or the accelerometer 62 described above may also be integrated in the female conductor 20 of the telescopic busbar 13. Further, these integrated functions may also be implemented in the double telescopic busbar system described with reference to Fig. 7 or in the telescopic busbar with expansion system that shall be described with reference to Figs. 11 and 12.

Another application of the telescopic busbar is the conventional AC switchyard. Usually and from 132 kV AC, switchyards are designed with rigid connections between equipments like, disconnectors, circuit breakers, current transformers, etc. Those rigid connections are made of tubular conductors in aluminium alloy and connectors. Due to the thermal expansion properties of the alloy of the tube and the various temperature rises of the installation, it is always required to connect one end of the rigid busbar to equipment with a fixed connector and the second and with an expansion type connector to the next equipment. During the installation of the busbar system, the tube must be cut on site at the appropriate length taking into consideration the ambient temperature of installation as well as the minimum and maximum thermal expansion of the system during its working life which is depending of the temperatures range (min & max ambient as well as max temperature rise).

The present invention also envisages a variant of the telescopic busbar that is suitable for any High Voltage switchyard application where rigid busbars are used. This variant allows taking into account variations of the rigid busbar length that are caused by thermal expansion.

Fig. 11 is an axial cut view of a telescopic busbar having an expanding system according to an embodiment of the present invention.

Referring to Fig. 11, the telescopic busbar 110 has a female tube 20C itself made of an aluminium tube 21 which is equipped with bearings 23 and sealing joints 24.

A male conducting member 15C, similar to the male tube 15 B of Fig. 7, slides inside the female tube 20C with a limited axial force "F2" in order to allow the busbar system to expand within a stroke X₂ during thermal variations. The electrical continuity is again ensured by flexible shunts 26 or braids connected to the terminal contacts 25 and 18 provided, respectively, at the tubes 21 and 16.

Another male tube 15D, which works as an expansion member, is located at the opposite side of the male tube 15C and is also guided within the female tube 20C by a set of bearings 23. The male tube 15D provides an expanding function to the telescopic busbar 110 in order to deliver a system fully adjustable in length during its installation. The telescopic busbar 110 is adjustable in the length of X₃ which can be relatively long (1 to 2 meters) in order to cover any range of spans in AC switchyard applications for a same diameter size of busbar depending on the transferred current, electrodynamics strengths between phase to phase and voltage level.

A draining hole 118 may be located in a bottom area of the tube 21 to avoid condensation issues inside the chamber 21 c.

Fig. 12 shows a detailed view of the telescopic busbar expanding system.

The expanding system 111 is composed of a cylindrical rod 112 made in a high conductivity material like copper and a female contact 113. The rod 112 is electrically and mechanically fixed to a first wall 114 disposed along the cross-section of the tube 21 and itself part of the tube 21. The female contact 113 is electrically and mechanically fixed to a second wall 115 which is adapted to be disposed along the cross-section of the tube 16 and itself part of the tube 116 of the male conductor 15D. When a force "F1" is applied to the expansion member 15D, for instance manually, for extracting or retracting the expansion member 15D from the respective end part of the busbar 110, the first wall 114 remains fixed on the tube 21 while the second wall 115 slides along the rod 112, away or in the direction of the first wall 114, respectively, for adjusting the busbar length on this direction. The maximum stroke X₃ is limited by the longitudinal length of the rod 112.

The expanding system 111 works like a plug-in system in a static mode after installation and is never carrying any current in a dynamic mode which is corresponding to the installation time of the system. The force "F1" which is required to expand the busbar 110 within the adjustable length X₃ during the installation work is significantly larger than the force "F2" which is required during the expansion cycles of the life time of the busbar 110.

Two connectors 117 are preferably welded to each end of the male tubes 15C and 15D in order to connect the busbar 110 to other equipments terminals using suitable connectors. The connectors 117 may be welded at the factory which offers increased reliability of the connection itself.

Alternatively, the flexible connectors 30 described with reference to Fig. 8B may be used instead of connectors 117.

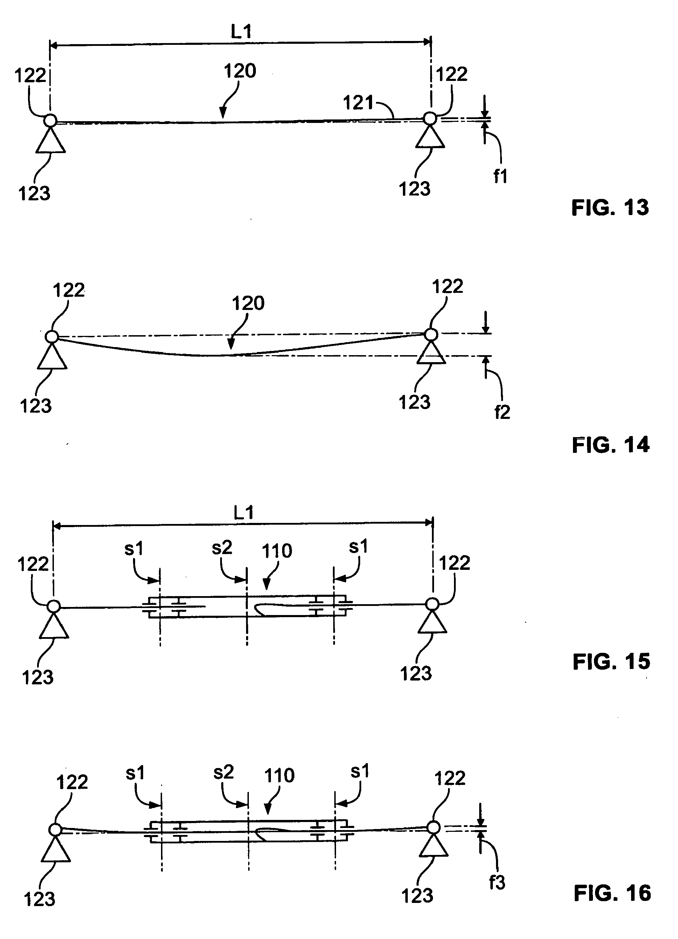

The mechanical behaviour and advantages of the adjustable telescopic busbar 110 of the present embodiment versus the conventional solution will now be described with reference to Figs. 13 to 16.

Referring to Fig. 13, a conventional busbar system 120 with a span L1 is made of a tubular conductor 121 connected by connectors 122 to the equipments 123. The tube 121 is mechanically submitted to the gravity and consequently to its dead weight. The combination of the span "L1" and the physical properties of the tube 121 provide a natural sag "f1" of the tubular conductor 121. Despite having no detrimental effect on the functioning of the busbar system 120, the natural sag has a negative visual impact in the switchyard.

Installers usually counter-bend the tube 121 before connecting it to the equipments in order to cancel the negative visual impact.

In Fig. 15, the adjustable telescopic busbar 110 is represented after connection to the equipments 123. Due to the increase of the inertial moment of the cross sections "s1" and "s2" of the busbar 110, the natural deflexion of the system is significantly reduced especially between the sections "s2" where the mechanical bending moment is maximum.

Consequently there is no natural sag due to the dead weight and there is no need to counter-bend the tubular conductor.

In reference to the Fig. 14, the conventional busbar system 120 as described in the Fig. 13 is now submitted to external mechanical strengths which are resulting of the combination of electrodynamics load (during a short circuit), icing and wind loads. As per design rules in conventional switchyards, the mechanical performances of the tube 121 must calculated to withstand those loads in order to work in any worst case scenario within its material yield field. This is driving the designers to increase sometime the size of the tube 121 in order to meet the above described requirement.

In Fig. 16, the adjustable telescopic busbar 110 is also submitted to the above combination of loads. Due to the increased mechanical performances described with Fig. 15, the busbar has a limited deflection under loads. Consequently, one could consider a significant increase of the span L1 using the same busbar 110, or/and a decrease of phase to phase distance which would represent significant surface and cost savings at the switchyard project level.

The key advantages of the adjustable telescopic busbar are various, such as:
- Easy and quick to install (save costs).
- No specific equipment to cut the tubes at site.
- Few models of adjustable telescopic busbar for a wide range of applications.
- High reliability of the connection system (connectors welded at the factory).
- No need to counter-bend the tube at site.
- Increase of the mechanical performances of the busbar system.
- Possibility to increase the span between supports or equipments.
- Possibility to reduce the phase to phase distance.

### LIST OF REFERENCE SIGNS

- 1: power electronic device, valve
- 2: wall bushing
- 3: roof
- 4: converter building
- 4a, 4b: volume of converter building using conventional flexible conductors and using telescopic bars, respectively
- 5: insulator string
- 6: flexible conductor
- 6a: extended portion of flexible conductor
- 6b: bended portion of flexible conductor
- 7: insulator of supporting post
- 7a, 7b: mechanical support of post insulator
- 7c: post support
- f: insulation distance between bent portion and post support
- i: minimum insulation distance
- 8: off-shore platform
- 9: pillar structure
- 10: seabed
- 11: sea
- 12: terminal connection of power electronic device
- 12a, 12b: right- and left-hand side terminal connections of power electronic device
- 13: telescopic busbar
- 14: articulated connectors
- La: length of telescopic busbar in retracted state
- Lb: length of telescopic busbar in expanded state
- 15: inner conducting member
- 16: tube part of inner conducting member
- 17: conductive end cap
- 18: electrical terminal connection
- 20: outer conducting member
- 21: tube of outer conducting member
- 21a, 21b: opposite ends of tube
- 21c: chamber of tube
- 22: sealing cap
- 23: bearing
- 24: sealing joint
- 25: fixed terminal connection
- 26: flexible conductor
- 26a-26f: conducting blades
- 26g-26h: terminal end fittings
- 27: adjustable air valve
- 28: hole
- 29: valve
- 30: flexible connector
- 31: connection part
- 32: terminal
- 32a: flat palm
- 33a, 33b: upper and lower flange
- 34: bolts
- 35: flange cavity
- 36: bush
- 37, 38: cavities of terminal
- 39: through hole
- 40: mounting axis, bolt
- 41: nut
- 42: flexible conducting element
- 50: surge arrester device
- 51: varistors
- 52: insulating housing
- 53: bolt
- 54: conductive wall
- 55: rod
- 56: hole
- 57: resin area
- 58: second rod
- 59: shades
- 60: surge counter
- 61: transmitter
- 62: accelerometer
- 63: transmitter of accelerometer
- 72: receiver
- 73: motorized air valve
- 100: computer
- 101: receiver unit
- 102: network
- 103: antenna
- 104: portable computer
- 70: double telescopic busbar
- 70a, 70b: opposed ends of double telescopic busbar
- 15A, 15B: male tubes
- 20A: female tube
- 110: telescopic busbar
- 20C: female tube
- 15C: male tube
- 15D: expansion member
- 111: expanding system
- 112: cylindrical rod
- 113: female contact
- 114: first wall
- 115: second wall
- 116: tube
- 117: connector
- 118: draining hole
- 120: conventional busbar system
- 121: tubular conductor
- 122: connectors
- 123: equipment

## Claims

1. A rigid conductor device having an adjustable length, the rigid conductor device (13) comprising:
a first conducting member (20, 20A, or 20C); and
a second conducting member (15, 15A, 15B or 15C);
wherein the first and the second conducting members are adapted to be assembled so that the second conducting member (15, 15A, 15B or 15C) can reversibly extend and
retract from an end part (21 a) of the first conducting member (20, 20A, or 20C) along an axial direction;
**characterized in that**:
the rigid conductor device further comprises:
damping means adapted to damp a movement of the second conducting member (15) with respect to the first conducting member (20);
wherein said damping means comprise a sealed chamber (21 c) adapted to pass a portion of the second conducting member (15) within, the sealed chamber (21c) being filled with a fluid so that the movement of the second conducting member (15) produces a compression force or a depression force opposed to the movement of the second conducting member (15).

2. The rigid conductor device of claim 1, wherein the first conducting member (20, 20A, or 20C) has a through hole adapted to pass the second conducting member (15, 15A, 15B or 15C) to and from said end part (21 a) of the first conducting member.

3. The rigid conductor device of claim 1 or claim 2, wherein
the first and second conducting members each comprise a body made of a rigid and tubular electrical conductor (21, 16).

4. The rigid conductor device of any one of claims 1 to 3, wherein
the second conducting member (15, 15A, 15B or 15C) comprises conductive coupling means (26) adapted to provide an electrical coupling between the first and second conducting members that is substantially constant irrespective from the adjustable length.

5. The rigid conductor device of claim 4, wherein the conductive coupling means (26) are adapted to be accommodated within the first conducting member (20, 20A, or 20C).

6. The rigid conductor device of claim 4 or claim 5, wherein
the conductive coupling means (26) are adapted to connect to a fixed terminal connection (25) of the first conducting member (20, 20A, or 20C) and are substantially flexible so as to adapt to the adjustable length.

7. The rigid conductor device of any one of claims 4 to 6, wherein the conductive coupling means (26) comprise:
a conducting blade (26) or a plurality of conducting blades (26a to 26f) that are mechanically and electrically assembled at terminal ends (26h, 26g);
wherein each conducting blade (26a to 26f) can be bended, and each of said assembled blades has a pre-determined length adapted to provide a functional gap between blades at a bended portion.

8. The rigid conductor device of any one of claims 1 to 7, wherein the chamber (21 c) is provided within the first conducting member (20), the chamber (21c) being sealed at one end by a sealing cap (22) and at the other end by a sealing joint (24) adapted to adjust to a cross section of the second conducting member (15).

9. The rigid conductor device of any one of claims 1 to 8, further comprising:
a control valve (27) for controlling the pressure of the fluid in the chamber (21 c).

10. The rigid conductor device of claim 9, further comprising:
a sensor device (62) adapted to measure a quantity of movement of the second conducting member (15) and to output a signal indicative of the measured quantity.

11. The rigid conductor device of any one of claims 1 to 10, further comprising:
a surge arrester (50) adapted to be integrated in the first and/or second conducting members (15, 20); and
surge monitoring means (60, 61) adapted to monitor the surge arrester (50) and to transmit monitored surge information to a remote terminal (100).

12. The rigid conductor device of claim 11, wherein the surge arrester (50) comprises:
a metallic part having a body adapted to be enclosed in the tubular conductor and a protrusion (55) adapted to emerge through an opening (56) of the respective first and/or second conducting members for allowing a surge current to flow to the ground, and
an insulating housing adapted to insulate the metallic part and to emerge around said protrusion to electrically isolate said surge current from the tubular conductor.

13. The rigid conductor device of any one of claims 1 to 12, further comprising:
an expansion conducting member (15D) adapted to be telescopically assembled to an end part of the first conducting member (20) opposed to the second conducting member (15C), and to extend and retract from the respective end part of the first conducting member (20C) for adjusting an initial length in said axial direction.

14. A double telescopic busbar device, comprising:
a first rigid conductor device according to any one of claims 1 to 12;
a second rigid conductor device according to any one of claims 1 to 12;
wherein the first and second rigid conductor devices are rigidly coupled to each other and symmetrically disposed along the axial direction so that the movable conducting member (15A) of the first rigid conductor device and the movable conducting member (15B) of the second rigid conductor device are adapted to extract and retract from opposing ends (70a, 70b) of the double telescopic device.

## Patentansprüche

1. Starre Leitervorrichtung mit verstellbarer Länge, wobei die starre Leitervorrichtung (13) umfasst:
ein erstes leitendes Element (20, 20A oder 20C); und
ein zweites leitendes Element (15, 15A, 15B oder 15C);
worin die ersten und zweiten leitenden Elemente dafür eingerichtet sind, so zusammengesetzt zu werden, dass das zweite leitende Element (15, 15A, 15B oder 15C) entlang einer Axialrichtung von einem Endteil (21a) des ersten leitenden Elements (20, 20A oder 20C) umkehrbar ausfahren und einfahren kann;
**dadurch gekennzeichnet, dass**:
die starre Leitervorrichtung ferner umfasst:
Dämpfungsmittel, die dafür eingerichtet sind, eine Bewegung des zweiten leitenden Elements (15) in Bezug auf das erste leitende Element (20) zu dämpfen;
worin die Dämpfungsmittel eine abgedichtete Kammer (21 c) umfassend, die dafür eingerichtet ist, einen Abschnitt des zweiten leitenden Elements (15) darin durchzulassen, wobei die abgedichtete Kammer (21 c) mit einem Fluid gefüllt ist, sodass die Bewegung des zweiten leitenden Elements (15) eine der Bewegung des zweiten leitenden Elements (15) entgegengesetzte Druckkraft oder Entspannungskraft erzeugt.

2. Starre Leitervorrichtung nach Anspruch 1, worin das erste leitende Element (20, 20A oder 20C) ein Durchgangsloch hat, das dafür eingerichtet ist, das zweite leitende Element (15, 15A, 15B oder 15C) zu und von dem Endteil (21 a) des ersten leitenden Elements durchzulassen.

3. Starre Leitervorrichtung nach Anspruch 1 oder 2, worin
die ersten und zweiten leitenden Elemente jeweils einen aus einem starren und röhrenförmigen elektrischen Leiter (21, 16) gefertigten Körper umfassen.

4. Starre Leitervorrichtung nach einem der Ansprüche 1 bis 3, worin
das zweite leitende Element (15, 15A, 15B oder 15C) leitende Kopplungsmittel (26) umfasst, die dafür eingerichtet sind, eine elektrische Kopplung zwischen den ersten und zweiten leitenden Elementen bereitzustellen, die im Wesentlichen konstant ist, unabhängig von der verstellbaren Länge.

5. Starre Leitervorrichtung nach Anspruch 4, worin die leitenden Kopplungsmittel (26) dafür eingerichtet sind, im ersten leitenden Element (20, 20A oder 20C) aufgenommen zu werden.

6. Starre Leitervorrichtung nach Anspruch 4 oder 5, worin
die leitenden Kopplungsmittel (26) dafür eingerichtet sind, mit einer festen Anschlussverbindung (25) des ersten leitenden Elements (20, 20A oder 20C) verbunden zu werden, und im Wesentlichen flexibel sind, um sich dadurch an die verstellbare Länge anzupassen.

7. Starre Leitervorrichtung nach einem der Ansprüche 4 bis 6, worin die leitenden Kopplungsmittel (26) umfassen:
eine leitende Lamelle (26) oder eine Vielzahl von leitenden Lamellen (26a bis 26f), die an Anschlussenden (26h, 26g) mechanisch und elektrisch zusammengesetzt sind;
worin jede leitende Lamelle (26a bis 26f) gebogen werden kann und jede der zusammengesetzten Lamellen eine vorbestimmte Länge hat, die dafür eingerichtet ist, an einem gebogenen Abschnitt einen funktionalen Zwischenraum zwischen den Lamellen bereitzustellen.

8. Starre Leitervorrichtung nach einem der Ansprüche 1 bis 7, worin die Kammer (21c) innerhalb des ersten leitenden Elements (20) ausgebildet ist, wobei die Kammer (21 c) an einem Ende durch eine Dichtungskappe (22) und am anderen Ende durch eine Dichtungsmuffe (24), die dafür eingerichtet ist, sich an einen Querschnitt des zweiten leitenden Elements (15) anzupassen, abgedichtet ist.

9. Starre Leitervorrichtung nach einem der Ansprüche 1 bis 8, ferner umfassend:
ein Steuerventil (27) zum Steuern des Drucks des Fluids in der Kammer (21c).

10. Starre Leitervorrichtung nach Anspruch 9, ferner umfassend:
eine Sensorvorrichtung (62), die dafür eingerichtet ist, einen Betrag der Bewegung des zweiten leitenden Elements (15) zu messen und ein Signal auszugeben, das den gemessenen Betrag angibt.

11. Starre Leitervorrichtung nach einem der Ansprüche 1 bis 10, ferner umfassend:
einen Überspannungsschutz (50), der dafür eingerichtet ist, in das erste und/oder zweite leitende Element (15, 20) integriert zu werden, und
Überspannungsüberwachungsmittel (60, 61), die dafür eingerichtet sind, den Überspannungsschutz (50) zu überwachen und überwachte Überspannungsinformation zu einer entfernten Datenstation (100) zu übertragen.

12. Starre Leitervorrichtung nach Anspruch 11, worin der Überspannungsschutz (50) umfasst:
einen metallischen Teil mit einem Körper, der dafür eingerichtet ist, in den röhrenförmigen Leiter eingeschlossen zu werden, und einem Vorsprung (55), der dafür eingerichtet ist, durch eine Öffnung (56) des jeweiligen ersten und/oder zweiten leitenden Elements herauszutreten, um zu ermöglichen, dass ein Überstrom zur Erdung fließen kann, und
ein isolierendes Gehäuse, das dafür eingerichtet ist, den metallischen Teil zu isolieren und rings um den Vorsprung hervorzustehen, um den Überstrom vom röhrenförmigen Leiter zu isolieren.

13. Starre Leitervorrichtung nach einem der Ansprüche 1 bis 12, ferner umfassend:
ein leitendes Erweiterungselement (15D), das dafür eingerichtet ist, teleskopartig an ein dem zweiten leitenden Element (15C) gegenüberliegendes Endteil des ersten leitenden Elements (20) angebaut zu werden und vom entsprechenden Endteil des ersten leitenden Elements (20C) auszufahren und einzufahren, um eine Anfangslänge in der Axialrichtung einzustellen.

14. Doppelteleskop-Sammelschienenvorrichtung, umfassend:
eine erste starre Leitervorrichtung nach einem der Ansprüche 1 bis 12;
eine zweite starre Leitervorrichtung nach einem der Ansprüche 1 bis 12;
worin die erste und die zweite starre Leitervorrichtung starr miteinander gekoppelt und entlang der Axialrichtung symmetrisch angeordnet sind, sodass das bewegliche leitende Element (15A) der ersten starren Leitervorrichtung und das bewegliche leitende Element (15B) der zweiten starren Leitervorrichtung dafür eingerichtet sind, von gegenüberliegenden Enden (70a, 70b) der Doppelteleskop-Vorrichtung auszufahren und einzufahren.

## Revendications

1. Dispositif de conducteur rigide, ayant une longueur ajustable, le dispositif conducteur rigide (13) comprenant :
un premier élément conducteur (20, 20A ou 20C) ; et
un deuxième élément conducteur (15, 15A, 15B ou 15c) ;
dans lequel les premier et deuxième éléments conducteurs sont adaptés pour être assemblés, de sorte que le deuxième élément conducteur (15, 15A, 15B ou 15C) peut s'étendre de manière réversible et se rétracter à partir d'une partie d'extrémité (21a) du premier élément conducteur (20, 20A ou 20C), le long d'une direction axiale ;
**caractérisé en ce que** :
le dispositif conducteur rigide comprend en outre :
des moyens d'amortissement, adaptés pour amortir un déplacement du deuxième élément conducteur (15) par rapport au premier élément conducteur (20) ;
dans lequel lesdits moyens amortisseurs comprennent une chambre à fermeture étanche (21c), adaptée pour permettre le passage d'une partie du deuxième élément conducteur (15), la chambre à fermeture étanche (21c) étant remplie d'un fluide, de sorte que le déplacement du deuxième élément conducteur (15) produit une force de compression ou une force de dépression, opposée au déplacement du deuxième élément conducteur (16).

2. Dispositif de conducteur rigide selon la revendication 1, dans lequel le premier élément conducteur (20, 20A ou 20C) comporte un trou de passage adapté pour permettre le passage du deuxième élément conducteur (15, 15A, 15B ou 15C) vers ladite partie d'extrémité (21a) du premier élément conducteur et à partir de celle-ci.

3. Dispositif de conducteur rigide selon les revendications 1 ou 2, dans lequel
les premier et deuxième éléments conducteurs comprennent chacun un corps constitué d'un conducteur électrique rigide et tubulaire (21, 16).

4. Dispositif de conducteur rigide selon l'une quelconque des revendications 1 à 3, dans lequel :
le deuxième élément conducteur (15, 15A, 15B ou 15C) comprend des moyens d'accouplement conducteurs (28), adaptés pour assurer un accouplement électrique pratiquement constant, indépendamment de la longueur ajustable, entre les premier et deuxième éléments conducteurs.

5. Dispositif de conducteur rigide selon la revendication 4, dans lequel les moyens d'accouplement conducteurs (26) sont adaptés pour être logés dans le premier élément conducteur (20, 20a ou 29C).

6. Dispositif de conducteur rigide selon les revendications 4 ou 5, dans lequel :
les moyens d'accouplement conducteurs (26) sont adaptés pour être connectés à une connexion à borne fixe (25) du premier élément conducteur (20, 20A ou 20C), et sont essentiellement flexibles, de sorte à s'adapter à la longueur ajustable.

7. Dispositif de conducteur rigide selon l'une quelconque des revendications 4 à 6, dans lequel les moyens d'accouplement conducteurs (26) comprennent :
une lame conductrice (26) ou plusieurs lames conductrices (26a à 26f), assemblées de manière mécanique et électrique au niveau des extrémités de raccordement (26h, 26g) ;
dans lequel chaque lame conductrice (26a à 26f) peut être fléchie, chacune desdites lames assemblées ayant une longueur prédéterminée, adaptée pour établir un espace fonctionnel entre les lames au niveau de la partie fléchie.

8. Dispositif de conducteur rigide selon l'une quelconque des revendications 1 à 7, dans lequel la chambre (21c) est agencée dans le premier élément conducteur (20), la chambre (21c) étant fermée de manière étanche au niveau d'une extrémité par un capuchon d'étanchéité (22) et au niveau de l'autre extrémité par un joint d'étanchéité (24), adapté pour se conformer à une section transversale du deuxième élément conducteur (15).

9. Dispositif de conducteur rigide selon l'une quelconque des revendications 1 à 8, comprenant en outre :
une soupape de commande (27), pour contrôler la pression du fluide dans la chambre (21c) ;

10. Dispositif de conducteur rigide selon la revendication 9, comprenant en outre :
un dispositif de détection (62), adapté pour mesurer une distance de déplacement du deuxième élément conducteur (15) et pour transmettre un signal indicatif de la distance mesurée.

11. Dispositif de conducteur rigide selon l'une quelconque des revendications 1 à 10, comprenant en outre :
un limiteur de surtension (50), adapté pour être intégré dans les premier et/ou deuxième éléments conducteurs (15, 20) ; et
un moyen de surveillance de la surtension (60, 61), adapté pour surveiller le limiteur de surtension (50) et pour transmettre les informations relatives à la surtension surveillée à un terminal à distance (100).

12. Dispositif de conducteur rigide selon la revendication 11, dans lequel le limiteur de surtension (50) comprend :
une partie métallique, comportant un corps adapté pour être renfermé dans le conducteur tubulaire, et une saillie (55), adaptée pour déborder à travers une ouverture (56) des premier/et ou deuxième éléments conducteurs, pour permettre l'écoulement d'un courant de surtension vers la terre ; et
un boîtier isolant, adapté pour isoler la partie métallique et pour déborder autour de ladite saillie, pour assurer l'isolation électrique dudit courant de surtension par rapport au conducteur tubulaire.

13. Dispositif de conducteur rigide selon l'une quelconque des revendications 1 à 12, comprenant en outre :
un élément conducteur extensible (15D), adapté pour être assemblé de manière télescopique à une partie d'extrémité du premier élément conducteur (20), opposé au deuxième élément conducteur (15C), et pour s'étendre et se rétracter à partir de la partie d'extrémité respective du premier élément conducteur (20C), pour ajuster une longueur initiale dans ladite direction axiale.

14. Dispositif double-bus télescopique, comprenant :
un premier dispositif de conducteur rigide selon l'une quelconque des revendications 1 à 12 ;
un deuxième dispositif de conducteur rigide selon l'une quelconque des revendications 1 à 12 ;
dans lequel les premier et deuxième dispositifs de conducteur rigides sont accouplés de manière rigide l'un à l'autre et son agencés de manière symétrique le long de la direction axiale, de sorte que l'élément conducteur mobile (15A) du premier dispositif de conducteur rigide et l'élément conducteur mobile (15B) du deuxième dispositif de conducteur rigide sont adaptés pour s'extraire et se retracer à partir des extrémités opposées (70a, 70b) du double dispositif télescopique.
